(19) Europäisches Patentamt
European Patent Office
Office européen des brevets

(11) Veröffentlichungsnummer: **0 079 554**
**B1**

# (12) EUROPÄISCHE PATENTSCHRIFT

(45) Veröffentlichungstag der Patentschrift: **07.01.87**

(51) Int. Cl.⁴: **D 01 F 6/66,** D 01 D 5/40, D 21 H 5/20

(21) Anmeldenummer: **82110274.6**

(22) Anmeldetag: **08.11.82**

## (54) Polyoxymethylenfibride, Verfahren zu ihrer Herstellung und ihre Verwendung.

(30) Priorität: **12.11.81 DE 3144916**

(43) Veröffentlichungstag der Anmeldung: **25.05.83 Patentblatt 83/21**

(45) Bekanntmachung des Hinweises auf die Patenterteilung: **07.01.87 Patentblatt 87/2**

(84) Benannte Vertragsstaaten: **AT BE CH DE FR GB IT LI NL SE**

(56) Entgegenhaltungen:
**EP - A - 0 029 572**
**DE - A - 1 241 116**
**US - A - 2 988 782**
**US - A - 3 293 205**

(73) Patentinhaber: **HOECHST AKTIENGESELLSCHAFT, Postfach 80 03 20, D-6230 Frankfurt am Main 80 (DE)**

(72) Erfinder: **Burg, Karlheinz, Dr., Eichenweg 18, D-6200 Wiesbaden (DE)**
Erfinder: **Cherdron, Harald, Prof. Dr., Eichenweg 40, D-6200 Wiesbaden (DE)**
Erfinder: **Gordon, Wolfgang, Dr., Schweriner Weg 34, D-6238 Hofheim am Taunus (DE)**
Erfinder: **Schlaf, Helmut, Dr., Zum Gimbacher Hof 20, D-6233 Kelkheim (Taunus) (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Unter Fibriden versteht man in Längsrichtung orientierte Fäserchen mit zellstoffähnlicher Struktur, d. h. mit endlicher, aber uneinheitlicher Länge, unregelmässiger Dicke, zerklüfteter Oberfläche und hohem Verzweigungsgrad.

Die Herstellung solcher Fibride ist beispielsweise aus der DE-PS 1 290 040 bekannt. Danach werden zunächst Plexusfäden hergestellt, diese dann in Stapellänge zerschnitten, die Stapelfaserteilchen in einer Flüssigkeit suspendiert und die in Suspension befindlichen Teilchen in an sich bekannter Weise zerfasert. Als Plexusfaden wird hier ein fadenartiges Erzeugnis aus einem kristallinen Kunststoff mit einem von tunnelartigen Kanälen und Hohlräumen praktisch freien dreidimensionalen Netzwerk aus vielen molekular orientierten film- bzw. bandartigen Fibriden von weniger als 2 µm Dicke bezeichnet, die sich der Länge nach in regellosen Abständen miteinander vereinigen und voneinander trennen und vorzugsweise in Richtung der Längsachse orientiert sind.

Diese Plexusfäden und deren Herstellung sind in der belgischen Patentschrift 568 524 näher beschrieben. Zur Herstellung der Plexusfäden wird dabei eine unter ihrem autogenen oder höherem Druck stehende Lösung eines synthetischen Polymeren bei einer Temperatur, die oberhalb des bei normalem Druck gemessenen Siedepunktes des Lösungsmittels liegt, durch eine Öffnung in einen unter niedrigerem Druck stehenden Raum ausgepresst. Man bezeichnet diese Herstellung von Plexusfäden auch als Flash-Spinnen oder Entspannungs-Spinnen.

Auch aus Polyoxymethylen kann man auf diesem Weg Plexusfäden herstellen und dann zu Fibriden zerfasern. Als Lösungsmittel zur Herstellung der Plexusfäden werden in der BE-PS 568 524 aprotische Lösungsmittel und zwar Methylenchlorid, Äthylenchlorid, Acetonitril und Methyläthylketon verwendet. Wie Versuche gezeigt haben, entstehen dabei selbst bei äusserst niedrigen Polymerkonzentrationen z.B. von 1 Gew.-% im Methyläthylketon keine Fibride, sondern ausschliesslich Plexusfäden. Da Plexusfäden zur Papierherstellung und als Zusatz für Baustoffe jedoch ungeeignet sind, müssen sie nach der besagten DE-PS 1 290 040 in einem zweiten Verfahrensschritt zu Fibriden verarbeitet werden, wodurch das Verfahren aufwendiger wird. Die so erhaltenen Polyoxymethylenfibride besitzen insbesondere eine relativ geringe spezifische Oberfläche sowie einen geringen Mahlgrad, und die daraus hergestellten Papiere weisen relativ geringe Festigkeiten auf.

In der US-PS 2 988 782 wird demgegenüber die Herstellung von Fibriden durch Fällung von Polymeren unter bestimmten Fällbedingungen vorgeschlagen. Derartige Fibride sind für die Herstellung von «sheet-like structures» auf der Papiermaschine geeignet. Hierbei werden jedoch unter Fibriden Teilchen verstanden, die faserartig oder folienartig sind. Die folienartigen Bestandteile stören bei der technisch durchgeführten Papierherstellung, da sie zum Teil durch das Sieb hindurchlaufen. Auch machen sie das entstehende Papier minderwertig, da die folienartigen Bestandteile beim Drucken herausgerupft werden und weisse Fehlstellen entstehen. In Baustoffen tragen die folienartigen Bestandteile praktisch nichts zur gewünschten Verdickungswirkung bei und sind daher qualitätsmindernd.

Weiterhin wird in der DE-AS 1 241 116 die Bildung von lang- bzw. kurzfaserigem Polyoxymethylen durch Ausfällen des Polyoxymethylens aus seinen Lösungen beschrieben (vgl. Beispiele). Bei den als kurzfaserig charakterisierten Produkten handelt es sich jedoch um solche, die stark mit folienartigen Bestandteilen verunreinigt sind. Das langfasrige Produkt erweist sich auf Grund seiner übermässigen Länge von 10 bis 50 cm und seiner Dicke von über 1 mm als ungeeignet für die Papierherstellung und für den Einsatz als Verdickungsmittel in Baustoffen. Ausserdem lassen sich die beschriebenen Produkte nicht ohne Zerstörung ihrer Fibridstruktur trocknen.

In der DE-OS 2 947 490 wird schliesslich erstmalig ein einstufiges Verfahren zur Herstellung von Polyoxymethylenfibriden nach dem Flash-Spinn-Verfahren offenbart, das durch eine spezielle Wahl eines Lösungsmittelgemisches gekennzeichnet ist. Nachteilig an diesem Verfahren ist jedoch die Tatsache, dass das beanspruchte Gemisch aus einem niederen Alkohol und Wasser während des Verdampfens seine Zusammensetzung ändert und dass daher für die kontinuierliche Rückführung des verdampften Lösungsmittelgemisches aufwendige Mess- und Regeleinrichtungen notwendig werden, um die Lösungsmittelzusammensetzung konstant zu halten. Die danach erhaltenen Fibride neigen ausserdem beim Trocknen zum Zusammenkleben unter weitgehendem Verlust ihrer Fibridstruktur; auch ist ihr Schüttgewicht relativ hoch.

Die Aufgabe vorliegender Erfindung bestand nun darin, Polyoxymethylenfibride und ein Verfahren zu deren Herstellung bereitzustellen, welche die Nachteile des Standes der Technik und insbesondere vorstehend genannte Nachteile nicht oder zumindestens weitgehend nicht besitzen.

Gegenstand der Erfindung sind daher Polyoxymethylenfibride mit einer reduzierten spezifischen Viskosität von 0,5 und 2,0 $dl \cdot g^{-1}$, vorzugsweise 0,6 bis 1,20 $dl \cdot g^{-1}$ (gemessen in Butyrolacton, das 2 Gew.-% Diphenylamin enthält, bei 140 °C in einer Konzentration von 0,5 g/100 ml), einer spezifischen Oberfläche (nach BET mit Argon) von 30 bis 200 $m^2/g$, vorzugsweise 50 bis 120 $m^2/g$ und einer mittleren Länge der Teilchen zwischen 0,2 und 5 mm, dadurch gekennzeichnet, dass die Polyoxymethylenfibride zu mindestens 95% aus Teilchen bestehen, deren Verhältnis von Länge zu Durchmesser nicht kleiner als 5:1 ist, und dass das Schüttgewicht 150 g/l (luftdispergierter Zustand) nicht überschreitet.

Die Erfindung betrifft weiterhin ein Verfahren zur Herstellung derartiger Polyoxymethylenfibride durch Verdüsung einer Lösung des Polymeren in einem Lösungsmittelgemisch aus niederem Alkohol mit 1 bis 4 Kohlenstoffatomen und Wasser

in ein Fällbad, das in Bewegung gehalten wird, dadurch gekennzeichnet, dass die Temperatur im Fällbad, gemessen nach vollständiger Durchmischung von Lösung und Fällmittel hinter der Düse, 0–100 °C beträgt und das Lösungsmittelgemisch 3–25 Gew.-% Wasser, bezogen auf die Gesamtmischung, enthält.

Als Material zur Herstellung der erfindungsgemässen Fibride eignen sich die bekannten Polyoxymethylene. Darunter seien Homopolymerisate des Formaldehyds oder eines cyclischen Oligomeren des Formaldehyds, z.B. Trioxan verstanden, deren Hydroxylendgruppen in bekannter Weise chemisch, z.B. durch Verätherung oder Veresterung gegen Abbau stabilisiert sind.

Weiterhin umfasst der Begriff Polyoxymethylene erfindungsgemäss auch Copolymere des Formaldehyds oder eines cyclischen Oligomeren des Formaldehyds, vorzugsweise Trioxan, wobei die Copolymeren neben Oxymethyleneinheiten in der Hauptvalenzkette Oxyalkyleneinheiten mit mindestens zwei, bevorzugt zwei bis acht und speziell zwei bis vier benachbarten Kohlenstoffatomen aufweisen und primäre Alkoholendgruppen besitzen. Der Comonomeranteil in den Copolymeren beträgt zweckmässigerweise 0,1–20, vorzugsweise 0,5–10 Gew.-% und insbesondere 0,7–5 Gew.-%.

Als Verbindungen, die für die Copolymerisation mit Formaldehyd oder cyclischen Oligomeren des Formaldehyds, vorzugsweise Trioxan, geeignet sind, werden vor allem cyclische Äther, vorzugsweise mit 3, 4 oder 5 Ringgliedern und/oder vom Trioxan verschiedene cyclische Acetale, vorzugsweise Formale mit 5–11, vorzugsweise 5, 6, 7 oder 8 Ringgliedern und/oder lineare Polyacetale, vorzugsweise Polyformale verwendet.

Als Comonomere für Trioxan sind besonders Verbindungen der Formel

$$\underline{CH_2-[CR^1H]_x-[O-(CR^2H)_z]_y-O}$$

geeignet, in der (A) $R^1$ und $R^2$ gleich oder verschieden sind und jeweils ein Wasserstoffatom, einen aliphatischen Alkylrest mit 1–6, vorzugsweise 1, 2, 3 oder 4 Kohlenstoffatomen oder einen Phenylrest bedeuten und (a) x gleich 1, 2 oder 3 und y gleich Null ist oder (b) x gleich Null, y gleich 1, 2 oder 3 und z gleich 2 ist oder (c) x gleich Null, y gleich 1 und z gleich 3, 4, 5 oder 6 ist, oder (B) $R^1$ einen Alkoxymethylrest mit 2–6, vorzugsweise 2, 3 oder 4 Kohlenstoffatomen oder einen Phenoxymethylrest bedeutet, wobei x gleich 1 und y gleich Null oder y und z gleich 1 ist und $R^2$ die obengenannte Bedeutung hat.

Als cyclische Äther werden vor allem Epoxide z.B. Äthylenoxid, Propylenoxid, Styroloxid, Cyclohexenoxid, Oxacyclobutan und Phenylglycidyläther eingesetzt.

Als cyclische Acetale eignen sich vor allem cyclische Formale von aliphatischen oder cycloaliphatischen α,ω-Diolen mit 2–8, vorzugsweise 2, 3 oder 4 Kohlenstoffatomen, deren Kohlenstoffkette in Abständen von 2 Kohlenstoffatomen durch ein Sauerstoffatom unterbrochen sein kann, z.B. Glykolformal (1,3-Dioxolan), Propandiolformal (1,3-Dioxan), Butandiolformal (1,3-Dioxepan), und Diglykolformal (1,3,6-Trioxocan) sowie 4-Chlormethyl-1,3-dioxolan und Hexandiolformal (1,3-Dioxonan). Auch ungesättigte Formale wie Butendiolformal (1,3-Dioxacyclohepten-[5]) kommen in Frage.

Als lineare Polyacetale sind sowohl Homo- oder Copolymere der vorstehend definierten cyclischen Acetale als auch lineare Kondensate aus aliphatischen oder caclo-alyphatischen α,ω-Diolen mit aliphatischen Aldehyden oder Thioaldehyden, vorzugsweise Formaldehyd einsetzbar. Insbesondere werden Homopolymere linearer Formale von aliphatischen α,ω-Diolen mit 2–8, vorzugsweise 2–4 Kohlenstoffatomen verwendet, z.B. Poly(1,3-dioxolan), Poly(1,3-dioxan) und Poly-(1,3-dioxepan).

Als zusätzliche Comonomere für Trioxan werden gegebenenfalls noch Verbindungen mit mehreren polymerisierbaren Gruppen im Molekül, z.B. Alkylglycidylformale, Polyglykoldiglycidyläther, Alkandioldigylcidyläther oder Bis-(alkantriol)-triformale verwendet, und zwar in einer Menge von 0,05–5, vorzugsweise 0,1–2 Gew.-%, bezogen auf die Gesamtmonomermenge. Derartige zusätzliche Comonomere sind beispielsweise in der DE-AS 2 101 817 beschrieben.

Die Werte für die reduzierte spezifische Viskosität (RSV-Werte) der erfindungsgemäss eingesetzten Polyoxymethylene und damit auch der daraus erhaltenen Fibride liegen im allgemeinen zwischen 0,5 und 2,0 $dl \cdot g^{-1}$, vorzugsweise zwischen 0,7 und 1,20 $dl \cdot g^{-1}$ (gemessen in Butyrolaceton, das 2 Gew.-% Diphenylamin enthält, bei 140 °C in einer Konzentration von 0,5 g/100 ml).

Die Kristallitschmelzpunkte der Polyoxymethylene liegen im Bereich von 140–180 °C, vorzugsweise 150 °C–170 °C und ihre Dichten zwischen 1,38 und 1,45 $g \cdot ml^{-1}$, vorzugsweise 1,40 und 1,43 $g \cdot ml^{-1}$ (gemessen nach DIN 53 479).

Verwendet man Polymere mit einem niedrigeren RSV-Wert als vorstehend angegeben, so entstehen zwar auch Fibride; sie sind allerdings relativ kurz und sind in zunehmendem Masse mit nichtfaserigen Anteilen vermengt. Durch den RSV-Wert des Polymeren können somit die Faserlänge, der Schlankheits- und der Verästelungsgrad der Fibride gesteuert werden, so dass die bevorzugten Bereiche von dem Einsatzgebiet der Fibride abhängen. Bei höheren RSV-Werten bereitet insbesondere das Lösen des Polymeren in zunehmendem Masse Schwierigkeiten und ist daher aufwendiger.

Die erfindungsgemäss verwendeten, vorzugsweise binären oder ternären Oxymethylen-Copolymeren werden in bekannter Weise durch Polymerisieren der Monomeren in Gegenwart kationisch wirksamer Katalysatoren bei Temperaturen zwischen 0 und 100 °C, vorzugsweise zwischen 50 und 90 °C, hergestellt (vgl. z.B. US-Patentschrift 3 027 352). Als Katalysatoren werden hierbei beispielsweise Lewissäuren, z.B. Bortrifluorid und Antimonpentafluorid und Komplexverbindungen von Lewissäuren, vorzugsweise Ätherate, z.B.

Bortrifluoriddiäthylätherat und Bortrifluorid-di-tert.-butyl-ätherat verwendet. Ferner sind geeignet Protonensäuren, z.B. Perchlorsäure, sowie salzartige Verbindungen, z.B. Triphenylmethylhexafluorophosphat, Tritähyloxoniumtetrafluroborat oder Acetylperchlorat. Die Polymerisation kann in Wasser, Suspensionen oder Lösung erfolgen. Zur Entfernung instabiler Anteile werden die Copolymeren zweckmässigerweise einem kontrollierten thermischen oder hydrolytischen partiellen Abbau bis zu primären Alkoholendgruppen unterworfen (vgl. US-Patentschriften 3 103 499 und 3 119 623).

Die erfindungsgemäss verwendeten Homopolymeren des Formaldehyds oder des Trioxans werden ebenfalls in bekannter Weise durch katalytisches Polymerisieren des Monomeren hergestellt (vgl. z.B. US-Patentschriften 2 768 994 und 2 989 505).

Die erfindungsgemässen Fibride bestehen zu mindestens 95%, vorzugsweise zu mindestens 97% und insbesondere zu 98 bis 100% aus faserartigen Teilchen. Sie enthalten also entweder keine oder nur einen äusserst geringen Anteil folienartiger Bestandteile. Der Anteil an folienartigen Bestandteilen wird dabei mikroskopisch an feuchtem, noch nicht getrocknetem Produkt bestimmt. Ihr Gehalt ist als Zahl der folienartigen Bestandteile im Verhältnis zur Gesamtzahl der Partikel auf einer Fläche des Objektträgers definiert. Als folienartig werden solche Partikel bezeichnet, deren Verhältnis von Länge zu Durchmesser 5:1 unterschreitet. Die Messfläche und auch die Konzentration der Partikel auf dieser Messfläche ist dabei selbstverständlich in der Weise zu wählen, dass eine ausreichende Zahl von Partikeln zu sehen ist und damit die Messgenauigkeit entsprechend hoch ist.

Das Schüttgut ist entsprechend dem hohen Anteil an faserartigen Teilchen niedrig und liegt bei höchstens 150 g/l, vorzugsweise zwischen 10 und 100 g/l und insbesondere zwischen 20 bis 80 g/l. Zur Messung des Schüttgewichtes im Sinne der Erfindung werden 10–50 g bei Raumtemperatur getrockneter Fibride in einem Küchenmixgerät z.B. ®Starmix der Fa. Elektrostar Schöttle GmbH u.Co., Reichenbach, mit 1 l Inhalt bei Stufe II (ca. 1000 Upm) aufgeschlagen, bis sich alle Fibride frei bewegen können; hierzu sind zumeist ca. 10 Sekunden erforderlich. Danach werden sie mit einer geerdeten Litze entladen, um den Einfluss einer evtl. elektrostatischen Aufladung auszuschalten. Das Schüttgewicht wird in einem 250 ml Messzylinder bestimmt, wobei der Messzylinder vor der Ablesung mehrfach kräftig aufgestossen wird, bis das Schüttvolumen konstant bleibt.

Weiterhin weisen die erfindungsgemässen Fibride eine unregelmässige Länge auf, deren Mittelwert zwischen 0,2 und 5 mm, vorzugsweise 0,2 bis 2 mm und insbesondere zwischen 0,5 und 1,5 mm liegt. Der Querschnitt ist ebenfalls unregelmässig in Form und Grösse; die Dicke (der scheinbare Durchmesser) beträgt überwiegend etwa 1–200 μm, vorzugsweise 2–50 μm. Die mittlere Länge der Fibride wird bestimmt als CFL (classified fiber length) nach TAPPI-Vorschrift T 233 und die Dicke der Fibride nach TAPPI-Vorschrift T 234 (coarseness). Als Schnellmethode zur Bestimmung dieser mittleren Länge und der Dicke der Fibride eignet sich eine mikroskopische Vermessung, wobei die am häufigsten vorkommenden Längen und Dicken visuell bestimmt werden. In die Längenmessung gehen dabei nur die längsten Fibrillen (Verzweigungen) an den Fibriden ein.

Da die erfindungsgemässen Fibride stark verzweigt sind, besitzen sie eine hohe spezifische Oberfläche (nach BET mit Argon) von zumeist 30–200 $m^3/g$, vorzugsweise 50–120 $m^3/g$.

Auch der Mahlgrad liegt dementsprechend hoch und beträgt 20 bis 80° SR, vorzugsweise 25 bis 50° SR. Die Bestimmung des Mahlgrades erfolgt als Schopper-Riegler-Wert nach Merkblatt V/7/61 (Alte Fassung 107) des Vereins der Zellstoff- und Papier-Chemiker und Ingenieure (ausgegeben am 1. Juli 1961).

Die erfindungsgemässen Polyoxymethylenfibride besitzen hydrophile Oberflächeneigenschaften und sind daher – zumeist auch ohne Netzmittel – in Wasser leicht dispergierbar. Daraus hergestellte Filter haben verbesserte adsorptive Eigenschaften. In Sonderfällen kann es auch zweckmässig sein, durch Zusatz von geeigneten Hydrophobierungsmitteln hydrophobe Oberflächeneigenschaften zu erzeugen.

Die erfindungsgemässen Fibride können die weiter unten beschriebenen Zusatzstoffe wie funktionelle Additive, beispielsweise Nukleierungsmittel, Farbpigmente, Stabilisatoren, antistatische Flammschutzmittel, Gleit- bzw. Schmiermittel, optische Aufheller u.dgl. sowie Füllstoffe enthalten. Dies kann von Einfluss auf die Eigenschaften der Fibride sein, beispielsweise hinsichtlich der Morphologie, des Mahlgrades, des Schüttgewichtes. So werden spezifisch schwere Füllstoffe das Schüttgewicht entsprechend anheben; bei hohen Prozentsätzen solcher Füllstoffe kann dabei die oben angegebene Grenze von 150 g/l überschritten werden. Der erfindungsgemässe Bereich der Schüttdichte wird jedoch eingehalten, wenn man den Dichtenunterschied zwischen Füllstoff und Polymeren herausrechnet.

Im allgemeinen beträgt der Gehalt an Zusatzstoffen bis zu 75 Gew.-%, bei funktionellen Additiven vorzugsweise 0,1 bis 10 Gew.-%, bezogen auf das Gesamtgemisch; im Fall von Füllstoffen liegt der Vorzugsbereich bei 30 bis 65 Gew.-%. Aufgrund ihrer verzweigten Morphologie lassen sich die erfindungsgemässen Fibride sehr gut in bekannter Weise etwa wie in der DE-PS 1 290 040 beschrieben, zu Papier mit guten Eigenschaften verarbeiten.

Auch in Mischung mit anderen Faserstoffen, wie Zellstoff, Cellulosefasern und Kunstfasern lassen sich ausgezeichnete Papiere herstellen, die in üblicher Weise geglättet, gestrichen, kaschiert und bedruckt werden können.

Die erfindungsgemässen Fibride können beispielsweise auch für Tapeten, Filter, Etiketten, Diagrammpapiere und andere Spezialpapiere etc. eingesetzt werden. Auch auf Kartonmaschinen

sind die Polyoxymethylenfibride verarbeitbar, wobei die resultierenden Pappen eine ausgezeichnete Resistenz gegen Wasser haben. Ferner sind die erfindungsgemässen Polyoxymethylenfibride in «Non-Wowens» einsetzbar und können als Verdickungsmittel in Kaltbitumen, in Farben, Putzen, Klebstoffen, Dichtungsmassen und Beschichtungsmaterialien auf Basis ungesättigter Polyester, Epoxidharzen, Bitumenpasten und PVC-Plastisolen verwendet werden. Schliesslich eignen sie sich auch gut als Zusatz für Baustoffe, wie Zement, ggf. zusammen mit anderen faserbildenden Materialien, beispielsweise zur Herstellung von Zement-Faser-Platten u. dgl.

Bei dem erfindungsgemässen Verfahren zur Herstellung der Polyoxymethylen-Fibride wird eine Lösung des Polymeren durch eine oder mehrere Düsen in ein bewegtes Fällbad gedrückt. Hierzu stellt man zunächst eine vorzugsweise homogene Lösung des Polymeren her, wobei man je nach Herstellverfahren von trockenem oder lösungsmittelfeuchtem Pulver bzw. Granulat ausgehen kann und das Polymere mit dem Lösungsmittel vermischt und beispielsweise in Druckautoklaven unter Rührung z.B. durch Dampfmantelheizung oder durch Einblasen von Dampf erhitzt. Falls die Polyoxymethylene bei der Polymerisation bzw. dem sich daran anschliessenden Stabilisierungs- und Aufarbeitungsverfahren als Lösung oder Suspension in einer Alkohol/Wasser-Mischung der erfindungsgemässen Zusammensetzung anfallen, so kann diese auch direkt für das erfindungsgemässe Verfahren eingesetzt werden.

Erfindungsgemäss wird – wie bereits erwähnt – als Lösungsmittel eine Mischung von 75–97 Gew.-% eines niederen Alkohols mit 1–4 C-Atomen und 3–25 Gew.-% Wasser, jeweils bezogen auf das gesamte Lösungsmittelgemisch, eingesetzt. Als niedere Alkohole kommen hierfür beispielsweise Methanol, Äthanol, Isopropanol, n-Propanol, n-Butanol oder i-Butanol oder Gemische dieser Alkohole in Frage. Bei Verwendung von höheren Alkoholen mit mehr als 4 C-Atomen, beispielsweise n-Hexanol, entstehen zwar auch Fibride, jedoch ist dann die erforderliche Temperatur zur Herstellung der Lösung relativ hoch. Bevorzugt werden Methanol und Isopropanol eingesetzt.

Das Mischungsverhältnis von Alkohol und Wasser ist für die Fibridherstellung von wesentlicher Bedeutung. Verwendet man z.B. weniger als etwa 75 Gew.-% des niederen Alkohols und mehr als etwa 25 Gew.-% Wasser, so erhält man Fibride, die beim Trocknen sowohl bei Raumtemperatur als auch bei höheren Temperaturen zu einem mehr oder weniger körnigen Produkt zusammenkleben und ihre Fibridstruktur verlieren. Die Fibridstruktur ist durch Dispergiergeräte mit üblichen mechanischen Kräften nicht mehr freizulegen. Verfolgen kann man die Neigung zum Zusammenkleben durch Messung des Schüttgewichtes in der oben beschriebenen Weise. Ein weiterer Nachteil bei zu geringem Alkoholgehalt im Lösungsmittelgemisch besteht darin, dass die Fibride dann relativ kurz werden.

Verwendet man demgegenüber ein Lösungsmittelgemisch mit einem höheren Alkohol- und einem niedrigeren Wassergehalt, so bekommt man zunehmend Schwierigkeiten beim Lösen des Polymeren. Der Bereich von 85–95 Gew.-% des niederen Alkohols und 5–15 Gew.-% Wasser wird bevorzugt, da hier die Löseeigenschaften des Polymeren und die Stabilität der Fibridmorphologie beim Trocknen und die erzeugbare Länge der Fibride besonders gut in Einklang stehen.

Die Konzentration des Polymeren in dem Lösungsmittelgemisch beträgt in der Regel zwischen 10 und 300 g pro Liter Lösung, vorzugsweise zwischen 50 und 200 g pro Liter. Geringere Konzentrationen sind zumeist unwirtschaftlich, da sie einen hohen Lösungsmittelumlauf erfordern; höhere Konzentrationen beinhalten häufig die Gefahr der Bildung von zweidimensionalen folienartigen Bestandteilen. Die obere Grenze der Polymerkonzentration hängt in gewissem Umfang auch vom Molekulargewicht ab; je höher das Molekulargewicht, umso niedriger ist dabei die zulässige Konzentration. Bei kontinuierlicher Verfahrensführung muss die verwendete Polymerkonzentration auch mit der Lösungsmittelmenge des Fällbades in Einklang gebracht werden, damit die entstehende Fasersuspension pumpfähig bleibt, wofür eine Fibridkonzentration von unter 5 Gew.-% erforderlich ist. In der Regel wird je nach Länge der Fibride eine Endkonzentration von 1–3 Gew.-% angestrebt. Je länger die Fibride sind, um so mehr muss dabei verdünnt werden.

Es besteht ein Zusammenhang zwischen der Polymerkonzentration und der Faserlänge, so dass der Fachmann mit Hilfe der Polymerkonzentration (und – wie erwähnt – der Alkoholmenge) die gewünschten Faserdimensionen einstellen kann. So werden die Fibride um so kürzer, je geringer die Polymerkonzentration (und je geringer die Alkoholmenge) ist.

Die Temperatur der Lösung des Polyoxymethylens hängt vom Molekulargewicht des Polymeren, der Art und Menge des Comonomeren und von der Lösungsmittelzusammensetzung ab. Als untere Temperaturgrenze – soweit homogene Lösungen zum Einsatz kommen – die erforderliche Lösetemperatur anzusehen, während die obere Temperaturgrenze im wesentlichen nur durch wirtschaftliche Überlegungen begrenzt wird. Die Lösetemperatur ist für viele Beispiele bekannt und kann andernfalls leicht vom Fachmann aus bekannten Daten interpoliert oder experimentell ermittelt werden. Für die bevorzugten Alkohole in ihren bevorzugten Mischungsverhältnissen mit Wasser liegt dieser Temperaturbereich zwischen 150 und 190 °C. Die Lösung steht in der Regel unter dem Eigendampfdruck des Lösungsmittelgemisches bei dieser Temperatur, jedoch kann er durch Intergasdruck oder durch eine Pumpe beträchtlich erhöht werden. Im allgemeinen beträgt er zwischen 20 und 60 bar, vorzugsweise zwischen 20 und 30 bar.

Die Lösung kann neben den Polymeren noch Hilfsstoffe aus der Polymerisation enthalten, z.B. Zersetzungsprodukte der Katalysatoren für die

kationische Polymerisation, die in der GB-PS 1 146 649, in den DE-OSen 1 595 705 und 1 595 668 sowie in den DE-ASen 1 199 504 und 1 175 882 beschrieben sind. Weiterhin gehören hierzu auch basisch reagierende Verbindungen zur Entfernung instabiler Anteile bis zur primären Alkoholendgruppe, z.B. niedere tertiäre aliphatische Amine wie Triäthyl- oder Triäthanolamin oder ein sekundäres Alkaliphosphat wie Dinatriumhydrogenphosphat (vgl. US-PSen 3 174 948, 3 219 623 und 3 666 714) sowie die entstehenden Umsetzungsprodukte, z.B. Methylal, Trioxan, Tetroxan, Ameisensäure und Methylformiat.

Ferner kann die Polymerisatlösung die verschiedensten bekannten Zusatzstoffe enthalten. Als solche kommen beispielsweise die üblichen Nukleierungsmittel in Betracht, welche die Kristallisation beschleunigen und mit deren Hilfe die Morphologie der Fibride beeinflusst werden kann, wie z.B. verzweigte oder vernetzte Polyoxymethylene, Talkum oder Bornitrid (vgl. DE-PS 2 101 817, DE-OS 1 940 132).

Ausserdem können in der Lösung Füllstoffe suspendiert sein. Als solche eignen sich alle natürlich vorkommenden oder synthetisch hergestellten anorganischen Materialien in unmodifizierter oder oberflächenmodifizierter Form, insbesondere Metallpulver, Antimontrioxid, Russ, Graphit, Steinmehl, Quarzmehl, Glimmer, Schiefermehl, Feldspatpulver, Diatomeenerde, feinteiliger Asbest, schwerlösliche Oxide, Oxidhydrate, Hydroxide, Silikate, Aluminate, Borate, Ferrite, Sulfate, Carbonate, basische Salze und Doppelsalze vorzugsweise mit Aluminium und/oder Magnesium, Calcium, Natrium, Titan oder Eisen als Metallkomponente. Besonders bevorzugte Füllstoffe sind Titandioxid, Tonerde, Calciumcarbonat, Talkum, Dolomit, Wallastonit, Kieselsäure, Aluminiumoxidhydrat und Calciumsulfat. Besonders bevorzugt hiervon werden Tonerde, Calciumcarbonat, Talkum und Kieselsäure.

Diese Füllstoffe können in bekannter Weise z.B. mit Silanen behandelt sein und weisen im allgemeinen eine mittlere Teilchengrösse zwischen 0,1 und 50 μm, vorzugsweise zwischen 0,5 und 10 μm auf.

Die Menge an Zusatzstoff in der Polymerlösung hängt vom Anwendungsgebiet und der Art des Zusatzstoffes ab und liegt so hoch, dass die weiter oben genannten Gehalte in den Fibriden erhalten werden. Im allgemeinen beträgt sie also bis zu 75%, bei funktionellen Additiven vorzugsweise zwischen 0,1 und 10 Gew.-%, bezogen auf Gesamtfeststoff bestehend aus Polymeren und Zusatzstoff. Im Falle eines Füllstoffes kommt für die meisten Anwendungsgebiete vorteilhafterweise eine Konzentration von 30–65 Gew.-%, bezogen auf Gesamtfeststoff, zur Anwendung.

Als weitere Zusätze sind die bekannten Stabilisatoren gegen den Einfluss von Wärme, Sauerstoff und/oder Luft zu nennen, wie sie u.a. in der DE-OS 2 043 498 beschrieben sind. Insbesondere eignen sich hierzu Bisphenolverbindungen, Erdalkalisalze von Carbonsäuren sowie Guanidinverbindungen. Als Bisphenolverbindungen werden hauptsächlich Ester verwendet von einbasigen 4-Hydroxyphenylalkansäuren, die 7–13, vorzugsweise 7, 9 oder 9 Kohlenstoffatome enthalten und ein- oder zweifach mit einem 1–4 Kohlenstoffatome enthaltenden Alkylrest kernsubstituiert sind. Die Alkoholkomponente in diesen Estern sind aliphatische zwei-, drei- oder vierwertige Alkohole, die 2–6, vorzugsweise 2, 3 oder 4 Kohlenstoffatome enthalten. Als Beispiele für derartige Ester seien genannt: Ester der ω-(3-tert.-butyl-4-hydroxy-phenyl)-pentansäure, β-(3-Methyl-5-tert.-butyl-4-hydroxy-phenyl)-propionsäure, (3,5-Ditert.-butyl-4-hydroxyphenyl)-essigsäure, β-(3,4-Di-tert.-butyl-4-hydroxyphenyl)-propionsäure oder (3,5-Di-isopropyl-4-hydroxyphenyl)-essigsäure mit Äthylenglykol, Propandiol-(1,2), Propandiol-(1,3), Butandiol-(1,4), Hexandiol-(1,6), 1,1,1-Trimethyloläthan oder Pentaerythrit.

Als Erdalkalisalze von Carbonsäuren finden insbesondere Erdalkalisalze von aliphatischen, vorzugsweise hydroxylgruppenhaltigen ein-, zwei- oder dreibasigen Carbonsäuren mit 2–20, vorzugsweise 3–9 Kohlenstoffatomen Einsatz, z.B. die Calcium- oder Magnesiumsalze der Stearinsäure, Rizinolsäure, Milchsäure, Mandelsäure, Äpfelsäure oder Zitronensäure.

Als Guanidinverbindungen kommen Verbindungen der Formel

NC–NH–C–NH–R
‖
NH

in Betracht, in der R ein Wasserstoffatom, eine Cyanogruppe oder einen Alkylrest mit 1–6 Kohlenstoffatomen bedeutet, z.B. Cyanoguanidin, N-Cyano-N′-methylguanidin, N-Cyano-N′-äthylguanidin, N-Cyano-N′-isopropylguanidin, N-Cyano-N′-tert.-butylguanidin oder N,N′-Dicyanoguanidin. Die Guanidinverbindung wird gegebenenfalls in einer Menge von 0,01–1, vorzugsweise 0,02–0,5 Gew.-%, bezogen auf das Gesamtgewicht eingesetzt.

Ferner kann die Lösung auch noch andere Zusatzstoffe wie bekannte Antistatika, Flammschutzmittel oder Gleit- bzw. Schmiermittel etc. enthalten.

Gefärbte Polyoxymethylenfibride kann man dadurch erhalten, dass man Farbstoffe in der Polymerlösung löst oder dispergiert. Für manche Anwendung ist auch der Zusatz von optischen Aufhellern interessant.

Zur Verbesserung der Dispergierbarkeit der Polyoxymethylenfibride können der Lösung auch oberflächenaktive Mittel wie oxäthylierte Alkohole, Carbonsäuren oder Amine, Alkansulfonate oder hydroxylgruppentragende Polymere wie Polyvinylalkohol oder Carboxymethylcellulose zugesetzt werden.

Die Polymerlösung wird dann durch eine oder mehrere Düsen gedrückt, deren Gestaltung (Grösse, Form und Länge) zwar die Abmessungen der entstehenden Fibride beeinflusst, jedoch nicht erfindungswesentlich ist. Geeignete Düsen sind beispielsweise in der BE-PS 568 524 beschrieben. Erwähnt seien hier einfache Lochdüsen mit einem

Durchmesser von beispielsweise 0,5–5 mm, Rohre mit 1–10 mm Durchmesser und 1–1000 cm Länge sowie konische Düsen mit einem Ringspalt von 0,02–5 mm, vorzugsweise 0,05–0,5 mm Breite. Besonders bevorzugt werden Ventile mit verstellbarem kreisförmigem Ringspalt, bei denen man durch Variation des Ringspaltes Einfluss auf die Faserdimensionen nehmen kann. Ein derartiges Ventil ist in der anliegenden Figur wiedergegeben. Darin bedeutet 1 ein Rohr, durch das das Fällbad strömt. Senkrecht dazu aufgesetzt ist das Ventil 2, durch welches die Polymerlösung zugegeben wird; 3 stellt dabei das Ventilgehäuse und 4 den Ventilkegel dar, mit dessen Hilfe der kreisförmige Ringspalt variabel eingestellt werden kann. a, b, c und d geben die in dem vorliegenden Ausführungsbeispiel 1 konkret benutzte Stellung des Ventilkegels an.

Je enger der Spalt oder die Öffnung der Düse ist, um so kürzer und schlanker sind die entstehenden Fibride. Die Lineargeschwindigkeit an der engsten Stelle der Düse beträgt im allgemeinen zwischen 1 und 200 m/s, vorzugsweise 5–30 m/sek.

Durch die Düse gelangt die Polymerisation anschliessend in ein kaltes bewegtes Fällbad, in der das Polymere unter Bildung von Fibriden ausfällt. Das Fällbad besteht vorzugsweise aus dem gleichen Lösungsmittelgemisch wie das der Polymerlösung, da bei kontinuierlicher Fahrweise eine Lösungsmittelrückführung ohne aufwendige Mess- und Regeltechnik möglich ist. Grundsätzlich ist aber das erfindungsgemässe Verfahren auch unter Verzicht auf diesen Vorteil mit Mischungen eines niederen Alkohols und Wasser anderer Zusammensetzung zu betreiben. Ferner kann man als Fällbad grundsätzlich auch andere Lösungsmittel, die nicht sauer sind, verwenden, z.B. Ketone, Ester, Äther u. dgl.

Erfindungsgemäss liegt die Temperatur des Fällbades zwischen 0 und 100 °C, vorzugsweise zwischen 30 und 70 °C. Die Messung der Temperatur des Fällbades erfolgt nach vollständiger Durchmischung von Lösung und Fällmittel hinter der Düse. Bei höheren Temperaturen fällt das Polymere zwar ebenfalls aus, aber es werden – je nach den anderen Verfahrensbedingungen – in zunehmendem Masse sehr kurze Fibride oder zweidimensionale folienartige Gebilde erzeugt. Dem kann in gewissem Mass durch Verwendung eines Lösungsmittelgemisches mit einem entsprechend höheren Alkoholgehalt entgegengearbeitet werden. Die Anwendung tieferer Temperaturen ist durch die dabei erforderliche Verwendung teurer Kühlmittel technisch aufwendiger, ohne dass dabei die erhaltenen Fibride qualitativ im wesentlichen Umfang zu verbessern sind. Um in die bevorzugten Bereiche der Fälltemperatur zu kommen, beträgt die Temperatur des fällenden Lösungsmittels vor der Düse je nach Intensität der Bewegung, der Temperatur der Lösung sowie der Durchsatzgeschwindigkeit zwischen 20 und 60 °C. Bei kontinuierlicher Verfahrensführung wird dieses Lösungsmittel durch Rückkühlung des Filtrates nach der Abtrennung der Fibride oder durch Kühlung der Fibridsuspension und anschliessende Abtrennung der Fibride erhalten, wobei die Rückkühlung normalerweise mit Kühlwasser erfolgt.

Erfindungsgemäss ist das Fällbad in ausreichender Bewegung zu halten, um das Entstehen der erfindungsgemäss angestrebten Fibride zu ermöglichen. Das genaue Ausmass der erforderlichen Bewegung lässt sich dabei leicht durch einige Versuche ermitteln, wobei die Intensität der Bewegung naturgemäss umso höher gewählt werden muss, je grösser der Durchsatz durch die Düse ist, um einen Stau vor der Düse zu vermeiden und eine rasche Durchmischung zu erzeugen. Weiterhin lässt sich generell sagen, dass ein geringer Grad an Bewegung die Bildung von folienartigen Bestandteilen begünstigt. Wenn also bereits durch die übrigen Verfahrensbedingungen, wie geringer Alkoholgehalt, hohe Konzentration des gelösten Polymeren, hohe Temperatur des Fällbades die Gefahr des Entstehens derartiger kurzfasriger und folienartiger Bestandteile gegeben ist, so lässt sich dem in gewissem Umfang durch eine intensivere Bewegung des Fällbades entgegensteuern. Im allgemeinen sollte diese Bewegung derart sein, dass die Lineargeschwindigkeit mindestens 0,1 m/s, vorzugsweise 0,1–30 m/s und besonders bevorzugt 0,3–10 m/s beträgt. Bei niedrigeren Geschwindigkeiten können flächenförmige Bestandteile ohne Fibridcharakter oder endlose fadenartige Gebilde entstehen. Höhere Geschwindigkeiten als 30 m/s erfordern demgegenüber unnötig hohe mechanische Energie. Zur Erzielung dieser Lineargeschwindigkeit kann das Fällbad, wenn es sich in einem zylindrischen Behälter befindet, gerührt werden, oder, wenn es sich in einem geschlossenen Rohr befindet, umgepumpt werden. Für die Entstehung von trockenbaren Fibriden ohne folienartige Bestandteile ist es im wesentlichen gleichgültig, ob die Strömung linear oder turbulent ist.

Der Winkel zwischen der Bewegungsrichtung der Lösung in der Düse und des kalten Lösungsmittels hat keinen wesentlichen Einfluss auf die Produkteigenschaften. Aus technischen Gesichtspunkten wird ein Winkel zwischen 30 und 90° bevorzugt. Insbesondere bei konischen Düsen braucht dieser Winkel nicht für alle Teile der Düse gleich zu sein. Falls erforderlich, können die Fibride nach bekannten Methoden gemahlen und/oder klassiert werden, um den Fibrillierungsgrad, die Faserlänge oder die Faserlängenverteilung zu beeinflussen. Zur Freisetzung diskreter Partikel ist eine Mahlung jedoch grundsätzlich nicht erforderlich.

Aus dem Fällbad werden die Fibride anschliessend mit bekannten mechanischen Methoden, z.B. durch Absaugen, Abpressen, Zentrifugieren usw. von einem Grossteil des nicht verdampften Lösungsmittels befreit, falls erforderlich mit Wasser gewaschen und getrocknet. Mit Hilfe geeigneter Mühlen können die Fibride mechanisch aufgelockert werden, wobei ein Schüttgewicht von 10–150 g/l erreicht wird.

Ein wesentlicher Vorteil des erfindungsgemässen Verfahrens gegenüber bekannten Methoden der Faserherstellung durch Ausfällen ist es, dass ausschliesslich hochverzweigte Fibride entstehen, die fast oder völlig frei von flächenförmigen folienartigen Bestandteilen sind. Ausserdem werden nach dem erfindungsgemässen Verfahren durch die Wahl der geeigneten Parameter wie Polymerkonzentration in der Lösung, Grösse der Düsenöffnung und Geschwindigkeit der Lösung und des Fällbades Fibride erhalten, deren mittlere Länge bei hohem Schlankheitsgrad im Millimeterbereich liegt. Gegenüber Polyoxymethylen-Fibriden, die durch Flash-Verdampfung hergestellt werden, kleben die erfindungsgemäss hergestellte Fibride beim Trocknen nicht zusammen, so dass die Fibridstruktur beim Trocknen voll erhalten bleibt. Dadurch sind diese Fibride auch für Trockenmischungen von Baustoffen sehr gut geeignet, wobei sich die füllstoffhaltigen Fibride durch ihr höheres spezifisches Gewicht besonderst gut einmischen lassen. Ausserdem ist das erfindungsgemässe Verfahren technisch weniger aufwendig, da die Kondensation der Dämpfe sowie die Korrektur der Lösungsmittelzusammensetzung durch Destillation und der damit verbundene Mess- und Regelaufwand entfällt.

Die erfindungsgemässen Fibride und das Verfahren zu ihrer Herstellung werden durch die nachfolgenden Beispiele näher erläutert:

Beispiel 1

In einem unter Druck stehenden Vorratsgefäss wurde unter Rühren eine Lösung von 3,8-Gew.-% eines Copolymeren aus 98 Gew.-% Trioxan und 2 Gew.-% Äthylenoxid, das einen RSV-Wert von 1,0 dl/g hatte und 0,1 Gew.-% Triäthylamin in einem Gemisch aus 95 Gew.-% Methanol und 5 Gew.-% Wasser bei 180 °C hergestellt. Die unter einem Druck von 27 bar stehende Lösung wurde durch eine ringförmige Düse entsprechend der Figur gepresst. Der Ventilkegel hatte dabei eine derartige Stellung, dass a = 7 mm, b = 0,15 mm, c = 0,07 mm und d = 7,2 mm betrug. Der Durchmesser des Ventilgehäuses lag bei 12,4 mm. Unter vorstehenden Bedingungen ergab sich ein Durchsatz von 280 l/h. Diese Lösung strömte dann nach dem Verlassen der Düse unmittelbar in ein senkrecht zu ihr angeordnetes Rohr mit 40 mm Durchmesser, in dem das obige Lösungsmittelgemisch mit einer Strömungsgeschwindigkeit von 0,35 m/s vorbeiströmte. Die Temperatur des Fällbades betrug vor der Düse 40 °C und nach erfolgter Durchmischung 59 °C. Die entstehenden Fibride wurden auf einem Trommelfilter abgesaugt, mit Wasser methanolfrei gewaschen, bei Raumtemperatur getrocknet und durch 5minütiges Rühren im ®Henschel-Mischer mechanisch aufgelockert. Die mikroskopische Betrachtung in polarisiertem Licht zeigte, dass die Fibride frei von folienartigen Bestandteilen waren. Die gemessenen Daten sind in Tab. 1 aufgeführt.

Aus 3,0 g der gemäss diesem Beispiel erhaltenen Fibride wurde unter Verwendung von 10 l Wasser auf dem Handblattgerät Rapid-Köthen ein Papierblatt gebildet, wobei keine Verluste auftraten.

Weiterhin wurden 50 g dieser Fibride zur Herstellung eines Dünnbettklebers bestehend aus 40 Teilen Zement, 60 Teilen Sand, 5 Teilen eines mit Polyvinylalkohol als Schutzkolloid hergestelltes Äthylenvinylacetatcopolymerpulver (88 Gew.-% Vinylacetat, 12 Gew.-% Äthylen), 0,5 Teilen Methylhydroyäthylcellulose (Viskosität 2%ig in Wasser bei 20 °C; 6000 mPa · s) und 0,4 Teilen Polyoxymethylen-Fibriden verwendet. Die Mischung ergab nach Anrühren mit 33 Teilen Wasser einen Dünnbettkleber mit cremiger Konsistenz, der sich mit einem Rakel glatt verstreichen liess.

Ferner wurden 10 g dieser Fibride zur Herstellung einer Faser-Zement-Platte in einem Küchenmixer in 800 ml Wasser dispergiert und 200 g Portland-Zement untergerührt. Die gleichmässig verteilte Suspension wurde dann dazu verwendet, nun unter Verwendung von 6 l Wasser auf dem Handblattbildner Rapid-Köthen eine Faser-Zement-Platte zu bilden. Diese Platte wurde unter Verwendung von Drahtsieben bei Raumtemperatur über Nacht mit einem Druck von 200 $kp/cm^2$ gepresst. Nach vierwöchiger Lagerung hatte die Platte ein Gewicht von 204 g und eine Dichte von 1,63 $g/cm^3$.

Beispiel 2

Entsprechend Beispiel 1 wurde eine Lösung von 3,0 Gew.-% eines Copolymeren aus 97,94 Gew.-% Trioxan, 2 Gew.-% Äthylenoxid und 0,06 Gew.-% Butandioldiglycidyläther, das einen RSV-Wert von 0,99 dl/g hatte und 0,1 Gew.-% Triäthylamin in einem Gemisch aus 90 Gew.-% Isopropanol und 10 Gew.-% Wasser bei 180 °C gelöst und durch eine Düse entsprechend der Figur gepresst, wobei die Ventilstellung so verändert wurde, dass der Durchsatz 250 l/h betrug. Das Fällbad aus 90 Gew.-% Isopropanol und 10 Gew.-% Wasser strömte in diesem Fall mit einer Geschwindigkeit von 0,55 m/s senkrecht an dem Düsenauslauf vorbei. Es hatte vor der Düse eine Temperatur von 42 °C und nach erfolgter Durchmischung eine Temperatur von 55 °C. Bei der Faserisolierung wurde auf die Wasserwäsche von Beispiel 1 verzichtet. Die gemessenen Daten sind in Tabelle 1 aufgeführt.

Aus den erhaltenen Fibriden, gebleichtem Fichtensulfitzellstoff mit 40° SR und Kieselgur im Gewichtsverhältnis 40/40/20 wurde im Handblattbildner Rapid-Köthen eine Filterplatte von 3 mm Dicke hergestellt. Diese Platte wurde in ein Labordruckfilter eingespannt. Bei Filtration von trübem Apfelmost wurden alle Trübstoffe zurückgehalten. Das Filtrat lief klar ab.

Beispiel 3

Entsprechend Beispiel 1 wurde eine Lösung von 4,3 Gew.-% eines Homopolymeren aus Trioxan, dessen Endgruppen mit Acetatgruppen verschlossen waren und dessen RSV-Wert 0,81 dl/g betrug, eingesetzt. Die Strömungsgeschwindigkeit des Fällbades betrug in diesem Falle 0,6 m/s und die Fälltemperatur 50 °C. Die gemessenen Daten sind in Tabelle 1 aufgeführt.

Beispiel 4

Entsprechend Beispiel 1 wurde eine Mischung aus 97 Gew.-% eines Lösungsmittelgemisches bestehend aus 85 Gew.-% Methanol und 15 Gew.-% Wasser und 3 Gew.-% Feststoff, bestehend aus 33⅓ Gew.-% Tonerde (englischer China Clay mit mittlerer Teilchengrösse 3 µm, dessen Analyse 46,2% $SiO_2$, 38,7% $Al_2O_3$ und 13,1% Glühverlust ergibt) und 66⅔ Gew.-% des Copolymeren gemäss Beispiel 2 bei 182 °C hergestellt, wobei sich das Copolymere löste. Im übrigen wurde nach Beispiel 1 verfahren, allerdings auf die Wasserwäsche verzichtet. Die Fibride enthielten 31,2% Tonerde entsprechend einer Pigmenteinbaurate von 93%. Die übrigen Daten sind in Tabelle 1 aufgeführt.

Beispiel 5

Beispiel 4 wurde wiederholt, wobei als Lösungsmittelgemisch 90 Gew.-% Methanol und 10 Gew.-% Wasser und als Feststoff eine Mischung aus 70 Gew.-% Calciumcarbonat mit orthoromboedrischer Teilchenform und einem mittleren Teilchendurchmesser von 0,6 µm und 30 Gew.-% des in Beispiel 2 verwendeten Copolymeren verwendet wurde. Die entstehenden Fibride enthielten 63,6% Calciumcarbonat entsprechend einer Pigmenteinbaurate von 91 Gew.-%. Die übrigen Daten sind in Tabelle 1 aufgeführt.

Beispiel 6

Entsprechend Beispiel 2 wurde eine Lösung von 10,0 Gew.-% des dort angegebenen Copolymeren in einem Gemisch aus 90 Gew.-% Methanol und 10 Gew.-% Wasser bei 182 °C gelöst und wie in Beispiel 2 beschrieben durch eine Düse in ein Fällbad gepresst. Die Aufarbeitung wurde wie in Beispiel 1 beschrieben durchgeführt. Die gemessenen Daten sind in Tabelle 1 aufgeführt.

| Morphologie | feucht Fibride<br>trocken Fibride |
|---|---|
| spez. Oberfläche | 53 m²/g |
| Anteil an faserartigen Teilchen | 99,5 % |
| Schüttgewicht | 25 g/l |
| mittlere Faserlänge | 1,4 mm |

Beispiel 7

Beispiel 1 wurde dahingehend abgewandelt, dass das Fällbad nicht aus einem Methanol/Wasser-Gemisch bestand, sondern aus reinem Wasser. Die gemessenen Daten sind in Tabelle 1 aufgeführt.

| Morphologie | feucht Fibride<br>trocken Fibride |
|---|---|
| spez. Oberfläche | 61 m²/g |
| Anteil an faserartigen Teilchen | 99,5 % |
| Schüttgewicht | 44 g/l |
| mittlere Faserlänge | 0,6 mm |

Beispiel 8

Beispiel 1 wurde dahingehend abgewandelt, dass das verwendete Copolymere aus 96,6% Trioxan und 3,4% Dioxolan bestand und in einer Konzentration von 2,0 Gew.-%, bezogen auf die Polymerlösung, eingesetzt wurde. Die gemessenen Daten sind aus Tabelle 1 ersichtlich.

| Morphologie | feucht Fibride<br>trocken Fibride |
|---|---|
| spez. Oberfläche | 79 m²/g |
| Anteil an faserartigen Teilchen | 99,5 % |
| Schüttgewicht | 31 g/l |
| mittlere Faserlänge | 0,3 mm |

Aus 3,0 Gew.-% der getrockneten Fibride und 98 Gew.-% ungesättigtem Polyester mit einer Viskosität von 1000 mPa · s wurde durch Dispergieren mit einem Zahnscheibendispergator eine Beschichtungsmasse hergestellt. In 1 mm Schichtdicke aufgetragen, lief diese Masse von einer senkrecht gestellten Glasplatte nicht ab.

Vergleichsbeispiel 1

Entsprechend Beispiel 1 wurde ein Lösungsmittelgemisch bestehend aus 60 Gew.-% Methanol und 40 Gew.-% Wasser verwendet. Die entstehenden Fibride waren extrem kurz und stark mit folienartigem Material verunreinigt. Beim Trocknen bei Raumtemperatur kleben sie zu einem krümligen Produkt zusammen. Verwendet man das feuchte Produkt zur Papierherstellung nach Beispiel 1, so laufen 16 Gew.-% des Produktes durch das Sieb.

Stellt man von dem getrockneten Produkt einen Dünnbettkleber gemäss Beispiel 1 her, so hat der Kleber nach dem Anmachen mit Wasser und dem Rakeln keinen Stand (er fliesst ohne Einwirkung von Schwerkräften) und durch die körnigen Bestandteile ist seine Oberfläche nicht glatt. In gleicher Weise verhalten sich Dünnbettkleber mit getrockneten Fibriden nach dem Flash-Verfahren gemäss DE-OS 2 947 490. Die gemessenen Daten sind in Tabelle 1 aufgeführt. Die Faserklassierung wurde vor der Trocknung durchgeführt.

Vergleichsbeispiel 2

Es wurde wie im Beispiel 1 verfahren, jedoch eine Fälltemperatur von 132 °C eingestellt. Es entstanden keine Fibride, sondern ein körniges Produkt mit einem mittleren Teilchendurchmesser von ca. 0,45 mm.

Vergleichsbeispiel 3

Beispiel 1 aus der DE-OS 2 947 490 wurde wiederholt. Die entstandenen Fibride wurden filtriert und bei Raumtemperatur getrocknet. Dabei verklebten die Fibride unter Bildung eines im wesentlichen krümligen und körnigen Produktes mit einem Schüttgewicht von 190 g/l.

Tabelle 1

Zusammenstellung der Eigenschaften der Produkte aus den Beispielen und Vergleichsbeispielen

| | Morphologie | | Spez. Oberfläche[1] | Anteil an faserartigen Teilchen[2] | Schüttgewicht[3] | mittlere Faserlänge (CFL) |
|---|---|---|---|---|---|---|
| | feucht | getrocknet | [m²/g] | [%] | [g/l] | [mm] |
| Beisp. 1 | Fibride | Fibride | 58 | >99,5 | 35 | 1,3 |
| Beisp. 2 | Fibride | Fibride | 76 | >99,5 | 25 | 1,0 |
| Beisp. 3 | Fibride | Fibride | 66 | >99,5 | 35 | 0,8 |
| Beisp. 4 | Fibride | Fibride | 64 | >99,5 | 60 | 1,1 |
| Beisp. 5 | Fibride | Fibride | 51 | >99,5 | 95 | 0,9 |
| Beisp. 6 | Fibride | Fibride | 53 | >99,5 | 25 | 1,4 |
| Beisp. 7 | Fibride | Fibride | 61 | >99,5 | 44 | 0,6 |
| Beisp. 8 | Fibride | Fibride | 79 | >99,5 | 31 | 0,3 |
| Vgl. Beisp. 1 | faserige und folienartige Partikel | körnig | 55 | ca. 60 | 210 | 0,1 |
| Vgl. Beisp. 2 | körnig | körnig | – | – | 280 | – |
| Vgl. Beisp. 3 | Fibride | körnig | 73 | >99,5 | 190 | 1,2 |

[1] Ermittelt nach BET-Methode mit Argon an bei Raumtemperatur getrockneter Probe.
[2] Bestimmt unter dem Lichtmikroskop.
[3] Gemessen an bei Raumtemperatur getrockneten Proben, die durch 30 sek. Rühren im «Stamix»mechan. aufgelockert waren.

**Patentansprüche**

1. Polyoxymethylenfibride mit einer reduzierten spezifischen Viskosität von 0,5 und 2,0 $dl/g^{-1}$, einer spezifischen Oberfläche von 30 bis 200 $m^2/g$ und einer mittleren Länge der Teilchen zwischen 0,2 und 5 mm, dadurch gekennzeichnet, dass die Polyoxymethylenfibride zu mindestens 95% aus Teilchen bestehen, deren Verhältnis von Länge zu Durchmesser nicht kleiner als 5:1 ist, und dass das Schüttgewicht 150 g/l nicht überschreitet.

2. Polyoxymethylenfibride nach Anspruch 1, dadurch gekennzeichnet, dass sie zu mindestens 97% aus derartigen Teilchen besteht.

3. Polyoxymethylenfibride nach Anspruch 1 und/oder 2, dadurch gekennzeichnet, dass die durchschnittliche Länge der Teilchen bei 0,2 bis 2 mm liegt.

4. Polyoxymethylenfibride nach einem oder mehreren der Ansprüche 1 bis 3, dadurch gekennzeichnet, dass das Schüttgewicht höchstens 100 g/l beträgt.

5. Polyoxymethylenfibride nach einem oder mehreren der Ansprüche 1 bis 4, dadurch gekennzeichnet, dass sie bis zu 75% an Zusatzstoffen enthalten.

6. Verfahren zur Herstellung von Polyoxymethylenfibriden nach einem oder mehreren der Ansprüche 1 bis 5 durch Verdüsung einer Lösung des Polymeren in einem Lösungsmittelgemisch aus niederem Alkohol mit 1 bis 4 Kohlenstoffatomen und Wasser in ein Fällbad, das in Bewegung gehalten wird, dadurch gekennzeichnet, dass die Temperatur im Fällbad, gemessen nach vollständiger Durchmischung von Lösung und Fällmittel hinter der Düse, 0–100 °C beträgt und das Lösungsmittelgemisch 3–25 Gew.-% Wasser, bezogen auf die Gesamtmischung, enthält.

7. Verfahren nach Anspruch 6, dadurch gekennzeichnet, dass das Fällbad mit einer Lineargeschwindigkeit von mindestens 0,1 m/s bewegt wird.

8. Verfahren nach Anspruch 6 und/oder 7, dadurch gekennzeichnet, dass das Lösungsmittelgemisch für das Polymere und die Lösungsmittelmischung im Fällbad die gleiche Zusammensetzung aufweisen.

9. Verfahren nach einem oder mehreren der Ansprüche 6 bis 8, dadurch gekennzeichnet, dass als Lösungsmittel eine Mischung aus 85 bis 95 Gew.-% eines niederen Alkohols mit 1–4 C-Atomen und 5 bis 15 Gew.-% Wasser verwendet wird.

10. Verfahren nach einem oder mehreren der Ansprüche 6 bis 9, dadurch gekennzeichnet, dass die Verdüsung der Polymerlösung durch Düsen mit verstellbarem Ringspalt in ein von dem Fällbad durchströmtes Rohr erfolgt.

11. Verwendung der Polyoxymethylenfibride gemäss einem oder mehreren der Ansprüche 1 bis 5, ggf. in Abmischung mit anderen Faserstoffen, zur Herstellung von Papier.

12. Verwendung der Polyoxymethylenfibride gemäss einem oder mehreren der Ansprüche 1 bis 5 als Zusatz zu Baustoffen.

**Claims**

1. Polyoxymethylene fibrids which have a reduced specific viscosity of 0.5 to 2.0 $dl/g^{-1}$, a specific surface area of 30 to 200 $m^2/g$, and an average length of the particles between 0.2 and 5 mm, characterized that the polyoxymethylene fibrids consist of at least 95% of particles whose ratio of length to diameter is at least 5:1, and which have a bulk density not exceeding 150 g/liter.

2. Polyoxymethylene fibrids as claimed in claim 1, which are comprised of at least 97% of such particles.

3. Polyoxymethylene fibrids as claimed in claim 1 and/or 2, wherein the average length of the particles is 0.2 to 2 mm.

4. Polyoxymethylene fibrids as claimed in one or more of claims 1 to 3, wherein the bulk density is at most 100 g/liter.

5. Polyoxymethylene fibrids as claimed in one or more of claims 1 to 4, which contain up to 75% of additives.

6. Process for preparing polyoxymethylene fibrids according to one or more of claims 1 to 5 by forcing a solution of the polymer in a solvent mixture of lower alcohol having 1 to 4 carbon atoms and water through a nozzle into a precipitation bath which is kept in motion, characterized that the temperature in the precipitation bath, measured downstream of the nozzle after complete mixing of solution and precipitating medium, is 0–100 °C and the solvent mixture contains 3–25% by weight of water, relative to the total mixture.

7. The process as claimed in claim 6, wherein the precipitation bath is moved with a linear speed of at least 0.1 m/s.

8. The process as claimed in claims 6 and/or 7, wherein the solvent mixture for the polymer and the solvent mixture in the precipitation bath have same composition.

9. The process as claimed in one or more of claims 6 to 8, wherein the solvent used is a mixture of 85 to 95% by weight of a lower alcohol having 1–4 carbon atoms and 5 to 15% by weight of water.

10. The process as claimed in one or more of claims 6 to 9, wherein the polymer solution is forced through nozzles having an adjustable annular gap into a pipe through which the precipitation bath flows.

11. The use of the polyoxymethylene fibrids as claimed in one or more of claims 1 to 5, if appropriate mixed with other fiber materials, for preparing paper.

12. The use of the polyoxymethylene fibrids as claimed in one or more of 1 to 5, as an additive for building materials.

**Revendications**

1. Fibrides de polyoxyméthylène présentant une viscosité spécifique réduite de 0,5 à 2,0 $dl/g^{-1}$, une surface spécifique de 30 à 200 $m^2/g$, et une longueur moyenne de particule comprise entre 0,2 et 5 mm, caractérisées en ce que lesdites fibrides de polyoxyméthylène consistent pour au moins 95% en particules dont le rapport de la longueur au diamètre n'est pas inférieur à 5:1, et en ce que la densité apparente ne dépasse pas 150 g/l.

2. Fibrides de polyoxyméthylène selon la revendication 1, caractérisées en ce qu'elles consistent pour au moins 97% en de telles particules.

3. Fibrides de polyoxyméthylène selon la revendication 1 et/ou 2, caractérisées en ce que la longueur moyenne des particules est comprise entre 0,2 et 2 mm.

4. Fibrides de polyoxyméthylène selon l'une ou plusieurs des revendications 1 à 3, caractérisées en ce que la densité apparente s'élève au plus à 100 g/l.

5. Fibrides de polyoxyméthylène selon l'une ou plusieurs des revendications 1 à 4, caractérisées en ce qu'elles contiennent jusqu'à 75% d'additifs.

6. Procédé pour la préparation de fibrides de polyoxyméthylène selon l'une ou plusieurs des revendications 1 à 5, par pulvérisation à la buse d'une solution du polymère dans un mélange solvant constitué d'un alcool inférieur contenant de 1 à 4 atomes de carbone et d'eau, dans un bain de précipitation maintenu en mouvement, caractérisé en ce que la température dans le bain de précipitation, mesurée aprés le mélange complet de la solution et de l'agent précipitant en aval de la buse, est comprise entre 0 et 100 °C, et en ce que le mélange solvant contient de 3 à 25% en poids d'eau, par rapport au mélange total.

7. Procédé selon la revendication 6, caractérisé en ce que le bain de précipitation est mis en circulation avec une vitesse linéaire d'au moins 0,1 m/s.

8. Procédé selon la revendication 6 et/ou 7, caractérisé en ce que le mélange solvant du polymère et le mélange solvant du bain de précipitation présentent la même composition.

9. Procédé selon une ou plusieurs des revendications 6 à 8, caractérisé en ce que le solvant utilisé est un mélange de 85 à 95% en poids d'un alcool inférieur contenant de 1 à 4 atomes de carbone et de 5 à 15% en poids d'eau.

10. Procédé selon une ou plusieurs des revendications 6 à 9, caractérisé en ce que la pulvérisation de la solution de polymère est effectuée au travers de buses présentant un espace annulaire réglable, dans une tubulure débouchant dans le bain de précipitation.

11. Utilisation des fibrides de polyoxyméthylène selon une ou plusieurs des revendications 1 à 5, éventuellement en mélange avec d'autres matières fibreuses, pour la fabrication du papier.

12. Utilisation des fibrides de polyoxyméthylène selon une ou plusieurs des revendications 1 à 5 comme additifs pour les matériaux de construction.

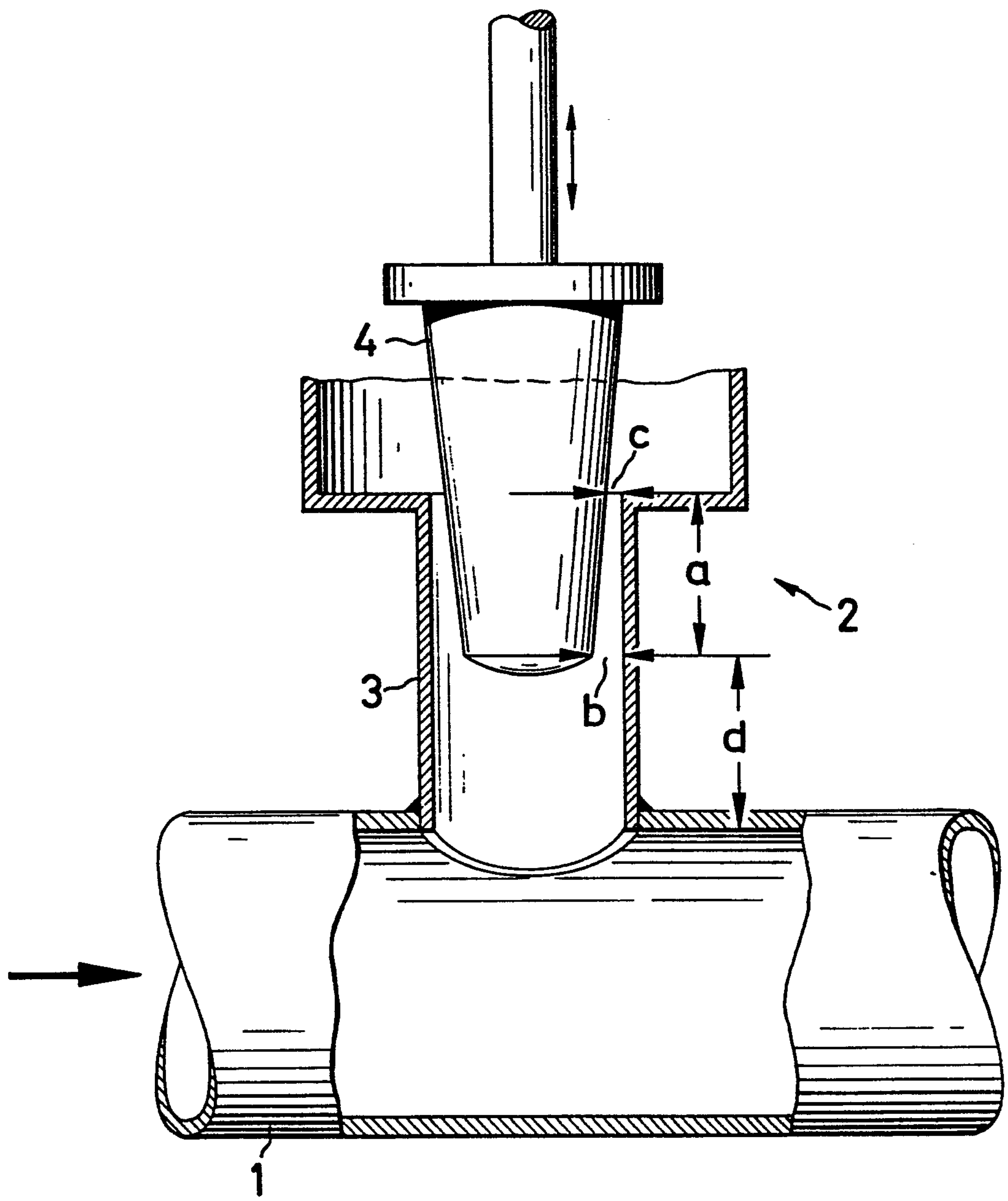
4
c
a
2
3
b
d
1